# EUROPEAN PATENT APPLICATION

(11) **EP 4 760 321 A1**
(43) Date of publication of application: **17.06.2026**
(21) Application number: 24219124.5
(22) Date of filing: 11.12.2024
(51) Int. Cl.: G01R 31/56, H02H 1/00, H02H 3/04, H02H 7/22, H02J 13/00

(54) **RULE UTILIZATION SYSTEM**

(71) Applicant: ABB SCHWEIZ AG, 5400 Baden (CH)
(72) Inventor: GITZEL, Ralf, 68165 Mannheim (DE); SONG, Chen, 68163 Mannheim (DE); BORRISON, Reuben, 68782 Brühl (DE); BHATTACHARYA, Nilavra, 68167 Mannheim (DE); TAMASCELLI, Nicola, 68259 Mannheim (DE)
(74) Representative: Maiwald GmbH

(57) **Abstract**

The present invention relates to a rule utilization system (100) for a low, medium or high voltage switchgear, comprising:
- a deterministic rule engine (10);
- an input unit (20); and
- an output unit (30);

wherein the input unit is configured to receive a request based on input from an operator relating to an operation to be performed on a switchgear;
wherein the deterministic rule engine is configured to execute a plurality of rules relating to the operation to be performed on the switchgear, wherein the plurality of rules relating to the operation to be performed on the switchgear were obtained based on the request, wherein the execution comprises utilization of the output unit to call a sensor system (40) to carry out a measurement of a part of the switchgear and utilization of the input unit to receive a result of the measurement of the part of the switchgear and/or utilization of the output unit to call a software system (50) to carry out an assessment of a part of the switchgear and utilization of the input unit to receive a result of the assessment of the part of the switchgear;
wherein the deterministic rule engine is configured to generate at least one action for the operator to perform relating to the switchgear, and wherein the generation of the at least one action for the operator comprises utilization of the result of the measurement of the part of the switchgear and/or the result of the assessment of the part of the switchgear; and
wherein the output unit is configured to output the at least one action for the operator.

## Description

### FIELD OF THE INVENTION

The present invention relates to a rule utilization system for a low, medium or high voltage switchgear, a maintenance and/or service system for a low, medium or high voltage switchgear, a rule utilization method for a low, medium or high voltage switchgear, a maintenance and/or service method for a low, medium or high voltage switchgear, as well as a computer program element.

### BACKGROUND OF THE INVENTION

While the level of required knowledge for service personnel increases, a wave of new, young and inexperienced people arrive and need tools to support them. This applies to many technical fields, one example being (low, medium, and high voltage) switchgears. Text and video can capture a lot of knowledge but are less helpful than a more interactive system.

Deterministic rules engine serves as a support tool for the service personnel that can guide them, based on the state of the machine (e.g., Switchgears) on what actions need to be performed to maintain or service a machine. This can be a series of instruction on a smartphone or something deployed on the machine to be serviced. Deterministic rules engines depend on a collection of facts presented as rules (e.g., using Ontologies). However, the workload on the service personnel is still high.

There is a need to further reduce the workload on service personnel who are maintaining and/or servicing a low, medium or high voltage switchgear or other similar complex equipment.

### SUMMARY OF THE INVENTION

Therefore, it would be advantageous to have an improved support tool for service personnel working on low, medium and high voltage switchgear.

The object of the present invention is solved with the subject matter of the independent claims, wherein further embodiments are incorporated in the dependent claims.

In a first aspect, there is provided a rule utilization system for a low, medium or high voltage switchgear, comprising:
- a deterministic rule engine;
- an input unit; and
- an output unit.

The input unit is configured to receive a request based on input from an operator relating to an operation to be performed on a switchgear. The deterministic rule engine is configured to execute a plurality of rules relating to the operation to be performed on the switchgear. The plurality of rules relating to the operation to be performed on the switchgear were obtained based on the request. The execution of the plurality of rules relating to the operation to be performed on the switchgear comprises utilization of the output unit to call a sensor system to carry out a measurement of a part of the switchgear and utilization of the input unit to receive a result of the measurement of the part of the switchgear and/or the execution of the plurality of rules relating to the operation to be performed on the switchgear comprises utilization of the output unit to call a software system to carry out an assessment of a part of the switchgear and utilization of the input unit to receive a result of the assessment of the part of the switchgear. The deterministic rule engine is configured to generate at least one action for the operator to perform relating to the switchgear, and the generation of the at least one action for the operator comprises utilization of the result of the measurement of the part of the switchgear and/or utilization of the result of the assessment of the part of the switchgear. The output unit is configured to output the at least one action for the operator.

Thus, a new technique is provided where rules relating to service and/or maintenance steps required to work on a switchgear are executed, and rather than indicating to service personnel that an action needs to be taken such as take sensor data or make an assessment, before moving on to a next step, such sensor data or assessment result is automatically acquired, enabling the service personnel needing only to review the sensor data and/or assessment result and not acquire the sensor data or assessment result themselves, reducing workload and improving efficiency.

It is to be noted that when reference is made to a rule utilization system for a low, medium or high voltage switchgear, this relates to a system to assist service personnel to service and/or maintain multiple different parts of the switchgear, such as: circuit breakers; earthing switches; disconnector switches; racking system; wiring circuits. In other words, rules that relate to a multitude of different service and operation requirements are utilized along with automatically acquired sensor data and/or assessments results to aid work performed on switchgears.

In an example, the execution of the plurality of rules relating to the operation to be performed on the switchgear comprises utilization of the output unit to call a database and utilization of the input unit to receive information from the database.

In an example, the generation of the at least one action for the operator comprises utilization of the plurality of rules relating to the operation to be performed on the switchgear.

In an example, the plurality of rules relating to the operation to be performed on the switchgear comprises computational code; and/or the plurality of rules relating to the operation to be performed on the switchgear comprises natural language.

In an example, the software system comprises one or more of: condition monitoring software, statistical model software.

In an example, the sensor system comprises one or more of: a hot spot detection system, a current monitor system, a voltage monitor system, a resistance monitor system.

In an example, the software system called to carry out an assessment of a part of the switchgear comprises a reliability calculation tool.

In an example, the software system called to carry out an assessment of a part of the switchgear comprises utilization of a software interface to a service.

In an example, the request comprises natural language text based instructions; and/or wherein the request comprises graph based instructions.

In a second aspect, there is provided a maintenance and/or service system for a low, medium or high voltage switchgear, comprising:
- a deterministic rule engine;
- an input unit;
- an output unit;
- a sensor system and/or a software system.

The input unit is configured to receive a request based on input from an operator relating to an operation to be performed on a switchgear. The deterministic rule engine is configured to execute a plurality of rules relating to the operation to be performed on the switchgear. The plurality of rules relating to the operation to be performed on the switchgear were obtained based on the request. The execution of the plurality of rules relating to the operation to be performed on the switchgear comprises utilization of the sensor system to carry out a measurement of a part of the switchgear to generate a result of the measurement of the part of the switchgear and/or the execution of the plurality of rules relating to the operation to be performed on the switchgear comprises utilization of the software system to carry out an assessment of a part of the switchgear to generate a result of the assessment of the part of the switchgear. The deterministic rule engine is configured to generate at least one action for the operator to perform relating to the switchgear, and the generation of the at least one action for the operator comprises utilization of the result of the measurement of the part of the switchgear and/or utilization of the result of the assessment of the part of the switchgear. The output unit is configured to output the at least one action for the operator.

Thus, a new complete system, with sensor systems and/or software systems, is provided where rules relating to service and/or maintenance steps required to work on a switchgear are executed, and rather than indicating to service personnel that an action needs to be taken such as take sensor data or make an assessment, before moving on to a next step, the sensor systems and/or software systems are used to acquire sensor data and/or an assessment result is automatically, enabling the service personnel needing only to review the sensor data or assessment result and not acquire the sensor data or assessment result themselves, reducing workload and improving efficiency.

It is to be noted that when reference is made to a maintenance and/or service system for a low, medium or high voltage switchgear, this relates to a system to assist service personnel to service and/or maintain multiple different parts of the switchgear, such as: circuit breakers; earthing switches; disconnector switches; racking system; wiring circuits. In other words, rules that relate to a multitude of different service and operation requirements are utilized along with automatically acquired sensor data and/or assessments results to aid work performed on switchgears.

In an example, the execution of the plurality of rules relating to the operation to be performed on the switchgear comprises utilization of the output unit to call a database and utilization of the input unit to receive information from the database.

In an example, the generation of the at least one action for the operator comprises utilization of the plurality of rules relating to the operation to be performed on the switchgear.

In an example, the plurality of rules relating to the operation to be performed on the switchgear comprises computational code; and/or wherein the plurality of rules relating to the operation to be performed on the switchgear comprises natural language.

In an example, the software system comprises one or more of: condition monitoring software, statistical model software.

In an example, the sensor system comprises one or more of: a hot spot detection system, a current monitor system, a voltage monitor system, a resistance monitor system.

In an example, the software system called to carry out an assessment of a part of the switchgear comprises a reliability calculation tool.

In an example, the software system called to carry out an assessment of a part of the switchgear comprises utilization of a software interface to a service.

In an example, the request comprises natural language text based instructions; and/or wherein the request comprises graph based instructions.

In a third aspect, there is provided a rule utilization method for a low, medium or high voltage switchgear, comprising:
receiving, by an input unit, a request based on input from an operator relating to an operation to be performed on a switchgear;
executing, by a deterministic rule engine, a plurality of rules relating to the operation to be performed on the switchgear, wherein the plurality of rules relating to the operation to be performed on the switchgear were obtained based on the request, wherein the executing comprises utilizing an output unit to call a sensor system to carry out a measurement of a part of the switchgear and utilizing the input unit to receive a result of the measurement of the part of the switchgear and/or utilizing the output unit to call a software system to carry out an assessment of a part of the switchgear and utilizing the input unit to receive a result of the assessment of the part of the switchgear;
generating, by the deterministic rule engine, at least one action for the operator to perform relating to the switchgear, and wherein the generating the at least one action for the operator comprises utilizing the result of the measurement of the part of the switchgear and/or the result of the assessment of the part of the switchgear; and
outputting, by the output unit, the at least one action for the operator.

Thus, a new technique is provided where rules relating to service and/or maintenance steps required to work on a switchgear are executed, and rather than indicating to service personnel that an action needs to be taken such as take sensor data or make an assessment, before moving on to a next step, such sensor data or assessment result is automatically acquired, enabling the service personnel needing only to review the sensor data and/or assessment result and not acquire the sensor data or assessment result themselves, reducing workload and improving efficiency.

It is to be noted that when reference is made to a rule utilization system for a low, medium or high voltage switchgear, this relates to a system to assist service personnel to service and/or maintain multiple different parts of the switchgear, such as: circuit breakers; earthing switches; disconnector switches; racking system; wiring circuits. In other words, rules that relate to a multitude of different service and operation requirements are utilized along with automatically acquired sensor data and/or assessments results to aid work performed on switchgears.

In an example, the executing the plurality of rules relating to the operation to be performed on the switchgear comprises utilizing the output unit to call a database and utilizing the input unit to receive information from the database.

In an example, the generation of the at least one action for the operator comprises utilization of the plurality of rules relating to the operation to be performed on the switchgear.

In an example, the plurality of rules relating to the operation to be performed on the switchgear comprises computational code; and/or the plurality of rules relating to the operation to be performed on the switchgear comprises natural language.

In an example, the software system comprises one or more of: condition monitoring software, statistical model software.

In an example, the sensor system comprises one or more of: a hot spot detection system, a current monitor system, a voltage monitor system, a resistance monitor system.

In an example, the software system called to carry out an assessment of a part of the switchgear comprises a reliability calculation tool.

In an example, the software system called to carry out an assessment of a part of the switchgear comprises utilization of a software interface to a service.

In an example, the request comprises natural language text based instructions; and/or wherein the request comprises graph based instructions.

In a fourth aspect, there is provided a maintenance and/or service method for a low, medium or high voltage switchgear, comprising:
receiving, by an input unit, a request based on input from an operator relating to an operation to be performed on a switchgear;
executing, by a deterministic rule engine, a plurality of rules relating to the operation to be performed on the switchgear, wherein the plurality of rules relating to the operation to be performed on the switchgear were obtained based on the request, wherein the executing comprises utilizing a sensor system to carry out a measurement of a part of the switchgear to generate a result of the measurement of the part of the switchgear and/or utilizing the software system to carry out an assessment of a part of the switchgear to generate a result of the assessment of the part of the switchgear;
generating, by the deterministic rule engine, at least one action for the operator to perform relating to the switchgear, and wherein the generating the at least one action for the operator comprises utilizing the result of the measurement of the part of the switchgear and/or the result of the assessment of the part of the switchgear; and
outputting, by an output unit, the at least one action for the operator.

Thus, a new technique utilizes a complete system, with sensor systems and/or software systems, where rules relating to service and/or maintenance steps required to work on a switchgear are executed, and rather than indicating to service personnel that an action needs to be taken such as take sensor data or make an assessment, before moving on to a next step, the sensor systems and/or software systems are used to acquire sensor data and/or an assessment result is automatically, enabling the service personnel needing only to review the sensor data or assessment result and not acquire the sensor data or assessment result themselves, reducing workload and improving efficiency.

It is to be noted that when reference is made to a maintenance and/or service method for a low, medium or high voltage switchgear, this relates to a method to assist service personnel to service and/or maintain multiple different parts of the switchgear, such as: circuit breakers; earthing switches; disconnector switches; racking system; wiring circuits. In other words, rules that relate to a multitude of different service and operation requirements are utilized along with automatically acquired sensor data and/or assessments results to aid work performed on switchgears.

In an example, the executing the plurality of rules relating to the operation to be performed on the switchgear comprises utilizing the output unit to call a database and utilizing the input unit to receive information from the database.

In an example, the generation of the at least one action for the operator comprises utilization of the plurality of rules relating to the operation to be performed on the switchgear.

In an example, the plurality of rules relating to the operation to be performed on the switchgear comprises computational code; and/or the plurality of rules relating to the operation to be performed on the switchgear comprises natural language.

In an example, the software system comprises one or more of: condition monitoring software, statistical model software.

In an example, the sensor system comprises one or more of: a hot spot detection system, a current monitor system, a voltage monitor system, a resistance monitor system.

In an example, the software system called to carry out an assessment of a part of the switchgear comprises a reliability calculation tool.

In an example, the software system called to carry out an assessment of a part of the switchgear comprises utilization of a software interface to a service.

In an example, the request comprises natural language text based instructions; and/or wherein the request comprises graph based instructions.

In a fifth aspect, there is provided a computer program element for controlling a processor to carry out the method according to the third aspect.

In an example, there is provided a computer readable medium having stored the computer element of the fifth aspect.

In a sixth aspect, there is provided a computer program element for controlling a processor to carry out the method according to the fourth aspect.

In an example, there is provided a computer readable medium having stored the computer element of the sixth aspect.

The computer program elements can for example be a software program but can also be a FPGA, a PLD or any other appropriate digital means.

The above aspects and examples will become apparent from and be elucidated with reference to the embodiments described hereinafter.

### BRIEF DESCRIPTION OF THE DRAWINGS

Exemplary embodiments will be described in the following with reference to the following drawings:
Fig. 1 shows an exemplar rule utilization system;
Fig. 2 shows an exemplar maintenance and/or service system;
Fig. 3 shows a detailed example of how rules can be generated by the systems of figures 1 and 2;
Fig. 4 shows an exemplar interaction of a developer with the systems of figures 1 and 2 with respect to how rules can be generated, where the systems of figures 1 and 2 in their rule generation functionality are also termed a Rules Co-Pilot in this figure;
Fig. 5 shows an exemplar interaction of a developer with the systems of figures 1 and 2 with respect to how rules can be generated, where the systems of figures 1 and 2 in their rule generation functionality are also termed a Rules Co-Pilot in this figure, where the developer is also having rules explained;
Fig. 6 shows a representation of an exemplar maintenance and/or service system, except to help aid explanation of the utility of the complete new development, in the system of figure 6 use is not made of a sensor system and/or a software system;
Fig. 7 shows a representation of an exemplar maintenance and/or service system, where the system is now the complete new development, in that use is made of a sensor system and/or a software system; and
Fig. 8 shows a representation of an exemplar maintenance and/or service system, where the system is now the complete new development, in that use is made of a sensor system and/or a software system.

### DETAILED DESCRIPTION OF EMBODIMENTS

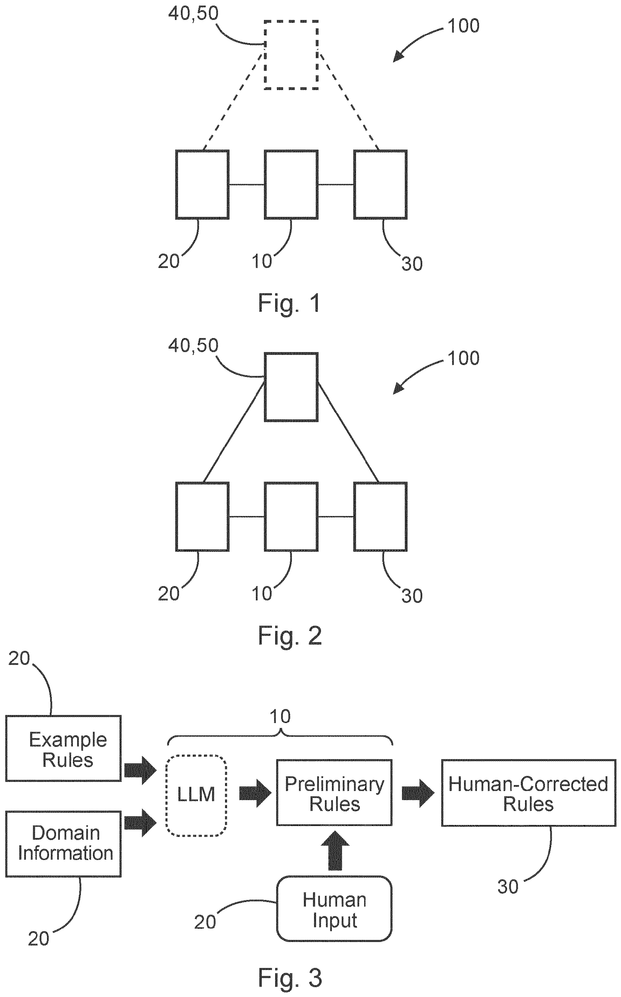

Fig. 1 shows an example of a rule utilization system 100 for a low, medium or high voltage switchgear, comprising:
- a deterministic rule engine 10;
- an input unit 20; and
- an output unit 30.

The input unit is configured to receive a request based on input from an operator relating to an operation to be performed on a switchgear. The deterministic rule engine is configured to execute a plurality of rules relating to the operation to be performed on the switchgear. The plurality of rules relating to the operation to be performed on the switchgear were obtained based on the request. The execution of the plurality of rules relating to the operation to be performed on the switchgear comprises utilization of the output unit to call a sensor system 40 to carry out a measurement of a part of the switchgear and utilization of the input unit to receive a result of the measurement of the part of the switchgear and/or the execution of the plurality of rules relating to the operation to be performed on the switchgear comprises utilization of the output unit to call a software system 50 to carry out an assessment of a part of the switchgear and utilization of the input unit to receive a result of the assessment of the part of the switchgear. The deterministic rule engine is configured to generate at least one action for the operator to perform relating to the switchgear, and the generation of the at least one action for the operator comprises utilization of the result of the measurement of the part of the switchgear and/or utilization of the result of the assessment of the part of the switchgear. The output unit is configured to output the at least one action for the operator.

Thus, a new technique is provided where rules relating to service and/or maintenance steps required to work on a switchgear are executed, and rather than indicating to service personnel that an action needs to be taken such as take sensor data or make an assessment, before moving on to a next step, such sensor data or assessment result is automatically acquired, enabling the service personnel needing only to review the sensor data and/or assessment result and not acquire the sensor data or assessment result themselves, reducing workload and improving efficiency.

It is to be noted that when reference is made to a rule utilization system for a low, medium or high voltage switchgear, this relates to a system to assist service personnel to service and/or maintain multiple different parts of the switchgear, such as: circuit breakers; earthing switches; disconnector switches; racking system; wiring circuits. In other words, rules that relate to a multitude of different service and operation requirements are utilized along with automatically acquired sensor data and/or assessments results to aid work performed on switchgears.

In an example, the execution of the plurality of rules relating to the operation to be performed on the switchgear comprises utilization of the output unit to call a database and utilization of the input unit to receive information from the database.

In an example, the generation of the at least one action for the operator comprises utilization of the plurality of rules relating to the operation to be performed on the switchgear.

In an example, the plurality of rules relating to the operation to be performed on the switchgear comprises computational code; and/or the plurality of rules relating to the operation to be performed on the switchgear comprises natural language.

In an example, the software system comprises one or more of: condition monitoring software, statistical model software.

In an example, the sensor system comprises one or more of: a hot spot detection system, a current monitor system, a voltage monitor system, a resistance monitor system.

In an example, the software system 50 called to carry out an assessment of a part of the switchgear comprises a reliability calculation tool.

In an example, the software system 50 called to carry out an assessment of a part of the switchgear comprises utilization of a software interface to a service.

In an example, the deterministic rule engine is configured to obtain the plurality of rules relating to the operation to be performed on the switchgear, comprising implementation of a large language model to process the request to generate the plurality of rules to be performed on the switchgear.

Thus, the deterministic rule engine makes use of a Large Language Model (LLM) such as ChatGPT to determine switchgear operation rules that can then be used, by deterministic rule engine, to support service personnel to guide them when working on a switchgear.

It is however to be noted that the plurality of rules need not be obtained in this manner, and can for example be existing rules that are obtained from a database for example, based on the request.

In an example, the large language model has been trained on a plurality of example rules relating to operation of the switchgear and associated domain information.

In an example, the processing of the request by the large language model comprises generation of a preliminary switchgear rule. The output unit is configured to output the preliminary switchgear rule, and the input unit is configured to receive an edit request from the operator for an edit to the preliminary switchgear rule. The generation of the plurality of rules to be performed on the switchgear comprises processing of the edit request by the large language model.

In this manner, human feedback is provided to fine tune the output of the LLM, thereby in effect validating the output of the LLM and mitigating the situation that can arise where LLMs generate incorrect or unreliable facts.

To put this another way, the LLM assists/guides an operator in the generation of rules, which can then be used to answer queries from the operator or other operator when working on the switchgear.

In an example, the large language model has been trained on a plurality of example rules relating to operation of the switchgear and associated domain information.

To put this another way, the LLM is finetuned/trained through the provision of contextual information in the form of examples and domain information, that could be in the form of vector embeddings, in order that desired results are generated.

In an example, the preliminary switchgear rule comprises computational code; and/or wherein the preliminary switchgear rule comprises natural language.

In an example, the edit request is in a natural language.

In an example, the request comprises natural language text based instructions; and/or wherein the request comprises graph based instructions.

Fig. 2 shows an example of a maintenance and/or service system 200 for a low, medium or high voltage switchgear, comprising:
- a deterministic rule engine 10;
- an input unit 20;
- an output unit 30;
- a sensor system 40 and/or a software system 50.
The input unit is configured to receive a request based on input from an operator relating to an operation to be performed on a switchgear. The deterministic rule engine is configured to execute a plurality of rules relating to the operation to be performed on the switchgear. The plurality of rules relating to the operation to be performed on the switchgear were obtained based on the request. The execution of the plurality of rules relating to the operation to be performed on the switchgear comprises utilization of the sensor system to carry out a measurement of a part of the switchgear to generate a result of the measurement of the part of the switchgear and/or the execution of the plurality of rules relating to the operation to be performed on the switchgear comprises utilization of the software system to carry out an assessment of a part of the switchgear to generate a result of the assessment of the part of the switchgear. The deterministic rule engine is configured to generate at least one action for the operator to perform relating to the switchgear, and the generation of the at least one action for the operator comprises utilization of the result of the measurement of the part of the switchgear and/or utilization of the result of the assessment of the part of the switchgear. The output unit is configured to output the at least one action for the operator.

Thus, a new complete system, with sensor systems and/or software systems, is provided where rules relating to service and/or maintenance steps required to work on a switchgear are executed, and rather than indicating to service personnel that an action needs to be taken such as take sensor data or make an assessment, before moving on to a next step, the sensor systems and/or software systems are used to acquire sensor data and/or an assessment result is automatically, enabling the service personnel needing only to review the sensor data or assessment result and not acquire the sensor data or assessment result themselves, reducing workload and improving efficiency.

It is to be noted that when reference is made to a maintenance and/or service system for a low, medium or high voltage switchgear, this relates to a system to assist service personnel to service and/or maintain multiple different parts of the switchgear, such as: circuit breakers; earthing switches; disconnector switches; racking system; wiring circuits. In other words, rules that relate to a multitude of different service and operation requirements are utilized along with automatically acquired sensor data and/or assessments results to aid work performed on switchgears.

In an example, the execution of the plurality of rules relating to the operation to be performed on the switchgear comprises utilization of the output unit to call a database and utilization of the input unit to receive information from the database.

In an example, the generation of the at least one action for the operator comprises utilization of the plurality of rules relating to the operation to be performed on the switchgear.

In an example, the plurality of rules relating to the operation to be performed on the switchgear comprises computational code; and/or wherein the plurality of rules relating to the operation to be performed on the switchgear comprises natural language.

In an example, the software system comprises one or more of: condition monitoring software, statistical model software.

In an example, the sensor system comprises one or more of: a hot spot detection system, a current monitor system, a voltage monitor system, a resistance monitor system.

In an example, the software system 50 called to carry out an assessment of a part of the switchgear comprises a reliability calculation tool.

In an example, the software system 50 called to carry out an assessment of a part of the switchgear comprises utilization of a software interface to a service.

In an example, the deterministic rule engine is configured to obtain the plurality of rules relating to the operation to be performed on the switchgear, comprising implementation of a large language model to process the request to generate the plurality of rules to be performed on the switchgear.

Thus, the deterministic rule engine makes use of a Large Language Model (LLM) such as ChatGPT to determine switchgear operation rules that can then be used, by deterministic rule engine, to support service personnel to guide them when working on a switchgear.

It is however to be noted that the plurality of rules need not be obtained in this manner, and can for example be existing rules that are obtained from a database for example, based on the request.

In an example, the large language model has been trained on a plurality of example rules relating to operation of the switchgear and associated domain information.

In an example, the processing of the request by the large language model comprises generation of a preliminary switchgear rule. The output unit is configured to output the preliminary switchgear rule, and the input unit is configured to receive an edit request from the operator for an edit to the preliminary switchgear rule. The generation of the plurality of rules to be performed on the switchgear comprises processing of the edit request by the large language model.

In this manner, human feedback is provided to fine tune the output of the LLM, thereby in effect validating the output of the LLM and mitigating the situation that can arise where LLMs generate incorrect or unreliable facts.

To put this another way, the LLM assists/guides an operator in the generation of rules, which can then be used to answer queries from the operator or other operator when working on the switchgear.

In an example, the large language model has been trained on a plurality of example rules relating to operation of the switchgear and associated domain information.

To put this another way, the LLM is finetuned/trained through the provision of contextual information in the form of examples and domain information, that could be in the form of vector embeddings, in order that desired results are generated.

In an example, the preliminary switchgear rule comprises computational code; and/or wherein the preliminary switchgear rule comprises natural language.

In an example, the edit request is in a natural language.

In an example, the request comprises natural language text based instructions; and/or wherein the request comprises graph based instructions.

In an example, there is provided a rule utilization method for a low, medium or high voltage switchgear, that is associated with utilization of the rule utilization system of Fig. 1. The method comprises:
receiving, by an input unit, a request based on input from an operator relating to an operation to be performed on a switchgear;
executing, by a deterministic rule engine, a plurality of rules relating to the operation to be performed on the switchgear, wherein the plurality of rules relating to the operation to be performed on the switchgear were obtained based on the request, wherein the executing comprises utilizing an output unit to call a sensor system to carry out a measurement of a part of the switchgear and utilizing the input unit to receive a result of the measurement of the part of the switchgear and/or utilizing the output unit to call a software system to carry out an assessment of a part of the switchgear and utilizing the input unit to receive a result of the assessment of the part of the switchgear;
generating, by the deterministic rule engine, at least one action for the operator to perform relating to the switchgear, and wherein the generating the at least one action for the operator comprises utilizing the result of the measurement of the part of the switchgear and/or the result of the assessment of the part of the switchgear; and
outputting, by the output unit, the at least one action for the operator.

Thus, a new technique is provided where rules relating to service and/or maintenance steps required to work on a switchgear are executed, and rather than indicating to service personnel that an action needs to be taken such as take sensor data or make an assessment, before moving on to a next step, such sensor data or assessment result is automatically acquired, enabling the service personnel needing only to review the sensor data and/or assessment result and not acquire the sensor data or assessment result themselves, reducing workload and improving efficiency.

It is to be noted that when reference is made to a rule utilization system for a low, medium or high voltage switchgear, this relates to a system to assist service personnel to service and/or maintain multiple different parts of the switchgear, such as: circuit breakers; earthing switches; disconnector switches; racking system; wiring circuits. In other words, rules that relate to a multitude of different service and operation requirements are utilized along with automatically acquired sensor data and/or assessments results to aid work performed on switchgears.

In an example, the executing the plurality of rules relating to the operation to be performed on the switchgear comprises utilizing the output unit to call a database and utilizing the input unit to receive information from the database.

In an example, the generation of the at least one action for the operator comprises utilization of the plurality of rules relating to the operation to be performed on the switchgear.

In an example, the plurality of rules relating to the operation to be performed on the switchgear comprises computational code; and/or the plurality of rules relating to the operation to be performed on the switchgear comprises natural language.

In an example, the software system comprises one or more of: condition monitoring software, statistical model software.

In an example, the sensor system comprises one or more of: a hot spot detection system, a current monitor system, a voltage monitor system, a resistance monitor system.

In an example, the software system 50 called to carry out an assessment of a part of the switchgear comprises a reliability calculation tool.

In an example, the software system 50 called to carry out an assessment of a part of the switchgear comprises utilization of a software interface to a service.

In an example, the deterministic rule engine is configured to obtain the plurality of rules relating to the operation to be performed on the switchgear, comprising implementation of a large language model to process the request to generate the plurality of rules to be performed on the switchgear.

Thus, the deterministic rule engine makes use of a Large Language Model (LLM) such as ChatGPT to determine switchgear operation rules that can then be used, by deterministic rule engine, to support service personnel to guide them when working on a switchgear.

It is however to be noted that the plurality of rules need not be obtained in this manner, and can for example be existing rules that are obtained from a database for example, based on the request.

In an example, the large language model has been trained on a plurality of example rules relating to operation of the switchgear and associated domain information.

In an example, the processing of the request by the large language model comprises generating a preliminary switchgear rule. The output unit outputs the preliminary switchgear rule, and the input unit receives an edit request from the operator for an edit to the preliminary switchgear rule, and the generating the plurality of rules to be performed on the switchgear comprises processing of the edit request by the large language model.

In this manner, human feedback is provided to fine tune the output of the LLM, thereby in effect validating the output of the LLM and mitigating the situation that can arise where LLMs generate incorrect or unreliable facts.

To put this another way, the LLM assists/guides an operator in the generation of rules, which can then be used to answer queries from the operator or other operator when working on the switchgear.

In an example, the large language model has been trained on a plurality of example rules relating to operation of the switchgear and associated domain information.

To put this another way, the LLM is finetuned/trained through the provision of contextual information in the form of examples and domain information, that could be in the form of vector embeddings, in order that desired results are generated.

In an example, the preliminary switchgear rule comprises computational code; and/or wherein the preliminary switchgear rule comprises natural language.

In an example, the edit request is in a natural language.

In an example, the request comprises natural language text based instructions; and/or wherein the request comprises graph based instructions.

In an example, there is provided a maintenance and/or service method for a low, medium or high voltage switchgear, that is associated with utilization of the maintenance and/or service system of Fig. 2. The method comprises:
receiving, by an input unit, a request based on input from an operator relating to an operation to be performed on a switchgear;
executing, by a deterministic rule engine, a plurality of rules relating to the operation to be performed on the switchgear, wherein the plurality of rules relating to the operation to be performed on the switchgear were obtained based on the request, wherein the executing comprises utilizing a sensor system to carry out a measurement of a part of the switchgear to generate a result of the measurement of the part of the switchgear and/or utilizing the software system to carry out an assessment of a part of the switchgear to generate a result of the assessment of the part of the switchgear;
generating, by the deterministic rule engine, at least one action for the operator to perform relating to the switchgear, and wherein the generating the at least one action for the operator comprises utilizing the result of the measurement of the part of the switchgear and/or the result of the assessment of the part of the switchgear; and
outputting, by an output unit, the at least one action for the operator.

Thus, a new technique utilizes a complete system, with sensor systems and/or software systems, where rules relating to service and/or maintenance steps required to work on a switchgear are executed, and rather than indicating to service personnel that an action needs to be taken such as take sensor data or make an assessment, before moving on to a next step, the sensor systems and/or software systems are used to acquire sensor data and/or an assessment result is automatically, enabling the service personnel needing only to review the sensor data or assessment result and not acquire the sensor data or assessment result themselves, reducing workload and improving efficiency.

It is to be noted that when reference is made to a maintenance and/or service method for a low, medium or high voltage switchgear, this relates to a method to assist service personnel to service and/or maintain multiple different parts of the switchgear, such as: circuit breakers; earthing switches; disconnector switches; racking system; wiring circuits. In other words, rules that relate to a multitude of different service and operation requirements are utilized along with automatically acquired sensor data and/or assessments results to aid work performed on switchgears.

In an example, the executing the plurality of rules relating to the operation to be performed on the switchgear comprises utilizing the output unit to call a database and utilizing the input unit to receive information from the database.

In an example, the generation of the at least one action for the operator comprises utilization of the plurality of rules relating to the operation to be performed on the switchgear.

In an example, the plurality of rules relating to the operation to be performed on the switchgear comprises computational code; and/or the plurality of rules relating to the operation to be performed on the switchgear comprises natural language.

In an example, the software system comprises one or more of: condition monitoring software, statistical model software.

In an example, the sensor system comprises one or more of: a hot spot detection system, a current monitor system, a voltage monitor system, a resistance monitor system.

In an example, the software system 50 called to carry out an assessment of a part of the switchgear comprises a reliability calculation tool.

In an example, the software system 50 called to carry out an assessment of a part of the switchgear comprises utilization of a software interface to a service.

In an example, the deterministic rule engine is configured to obtain the plurality of rules relating to the operation to be performed on the switchgear, comprising implementation of a large language model to process the request to generate the plurality of rules to be performed on the switchgear.

Thus, the deterministic rule engine makes use of a Large Language Model (LLM) such as ChatGPT to determine switchgear operation rules that can then be used, by deterministic rule engine, to support service personnel to guide them when working on a switchgear.

It is however to be noted that the plurality of rules need not be obtained in this manner, and can for example be existing rules that are obtained from a database for example, based on the request.

In an example, the large language model has been trained on a plurality of example rules relating to operation of the switchgear and associated domain information.

In an example, the processing of the request by the large language model comprises generation of a preliminary switchgear rule. The output unit is configured to output the preliminary switchgear rule, and the input unit is configured to receive an edit request from the operator for an edit to the preliminary switchgear rule, and the generation of the plurality of rules to be performed on the switchgear comprises processing of the edit request by the large language model.

In this manner, human feedback is provided to fine tune the output of the LLM, thereby in effect validating the output of the LLM and mitigating the situation that can arise where LLMs generate incorrect or unreliable facts.

To put this another way, the LLM assists/guides an operator in the generation of rules, which can then be used to answer queries from the operator or other operator when working on the switchgear.

In an example, the large language model has been trained on a plurality of example rules relating to operation of the switchgear and associated domain information.

To put this another way, the LLM is finetuned/trained through the provision of contextual information in the form of examples and domain information, that could be in the form of vector embeddings, in order that desired results are generated.

In an example, the preliminary switchgear rule comprises computational code; and/or wherein the preliminary switchgear rule comprises natural language.

In an example, the edit request is in a natural language.

In an example, the request comprises natural language text based instructions; and/or wherein the request comprises graph based instructions.

The rule utilization system for a low, medium or high voltage switchgear, the maintenance and/or service system for a low, medium or high voltage switchgear, the rule utilization method for a low, medium or high voltage switchgear, and the maintenance and/or service method for a low, medium or high voltage switchgear, are now described in further detail where reference is made to Figs. 3-8.

Fig. 3 shows a detailed example of how rules can be generated, where the deterministic rule engine 10 is in effect operating in a further capability as a rules editor or where a rules editor that is different to the deterministic rules engine 10 is operating, but where rules, that can be rules that have been corrected/augmented by a human such as a senior level expert, can be uploaded to a database and that are then obtained and utilized by the deterministic rule engine 10 when it is operating within the rule utilization system 100 and within the maintenance and/or service system 200. It is to be noted that for the rule utilization system for a low, medium or high voltage switchgear, the maintenance and/or service system for a low, medium or high voltage switchgear, the rule utilization method for a low, medium or high voltage switchgear, and the maintenance and/or service method for a low, medium or high voltage switchgear, existing rules can be utilized, accessed for example from a database, and need not be generated by the systems or in the methods.

Today, LLMs can be used to write code snippets that can be used by human programmers to write their own software more quickly. The inventors combined domain information and example rules, and then use the LLM to create preliminary rules suggestions for certain situations related to the domain - servicing of a switchgear.

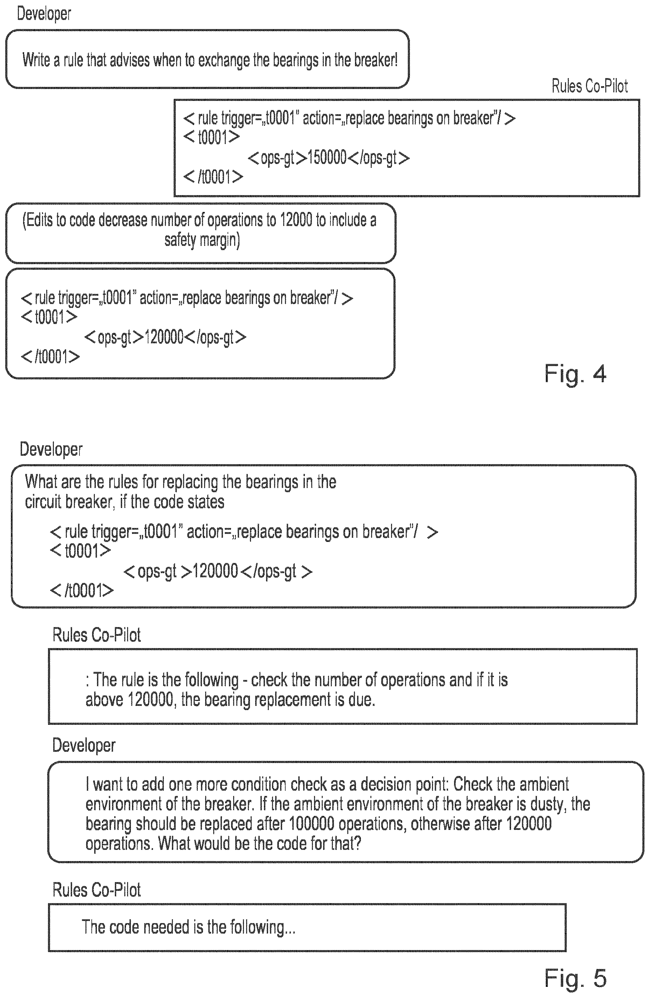

Thus, as shown in shown in Fig. 3 and expanded upon in more detail in Fig. 4, a human expert will ask the LLM to provide the rules based on his or her idea about what is needed to be in the system. The human can look at the rules and fix them, create variants not covered, and even provide new rules that are still missing. The LLM can be used to generate preliminary rules. This LLM can be a pre-trained LLM, but does not need to be, trained on rule generation data set which is then fine-tuned on more prompt and corresponding generated rule pairs. The finetuned LLMs is provided with additional contextual information in the form of example rules and domain information in the terms of vector embeddings to generate the desired results.

Thus, Large Language Models (LLMs) like ChatGPT are a quick way to get answers for questions on any kind of topic, however LLMs are known to fabricate facts and are thus not fully reliable. Also, they are black boxes, so one cannot double check easily how they came to their conclusions.

The above described feedback mechanism, involving the generation of preliminary rules and feedback on those rules, addresses this negative aspect of LLMs.

Thus, the rule utilization system and the maintenance and/or service system utilize a deterministic rules engine that serves as a support tool for the service personnel that can guide them, based on the state of the machine (e.g., Switchgears) on what actions need to be performed to maintain a machine, can be utilized with newly generated rule.

The deterministic rules engine can for example be a series of instructions on smartphone or something deployed on the machine to be serviced. Deterministic rules engines depend on a collection of facts presented as rules (e.g., using Ontologies). However, previously building the knowledge base was quite time intensive. Now, the rules used by the deterministic rules engine can be generated in a new way, as described above. Thus, the utilization system, that does not include a sensor system and/or software system can for example be a smartphone, and the maintenance and/or service system that now includes a sensor system and/or software system is more likely to be a full system that is permanently deployed on the machine to be serviced or a full system that can be brought to the machine to be serviced.

The new development can be part of an integrated development environment for deterministic rules. Fig. 4 shows a very simple example of how this tool could work. The developer writes, for example, a request for a rule that gives advice on when to exchange the bearings on the main shaft of a circuit breaker. The system proposes a rule that matches the chosen syntax (in this example a rather simple XML document). The developer who is also an expert in the domain decides to add a safety margin to the rule, decreasing the number of allowed operations.

There can be variants to the new development:
- The rules can also be ontologies or similar data formats
- The system can write the full set of rules and then let the expert fix them
- The system can look at existing rules and suggest changes including explanations and references to documents that suggest the changes.
- The system can explain existing rules, as shown in Fig. 5.

Regarding Fig. 5, the CoPilot is able to explain existing rules in a natural language so that the developer doesn't have to "read" the code. This can be part of a conversation to change or extend rules. An example conversation is shown in Fig. 5.

It is however to be noted that the plurality of rules need not be obtained in this manner, and can for example be existing rules that are obtained from a database for example, based on the request.

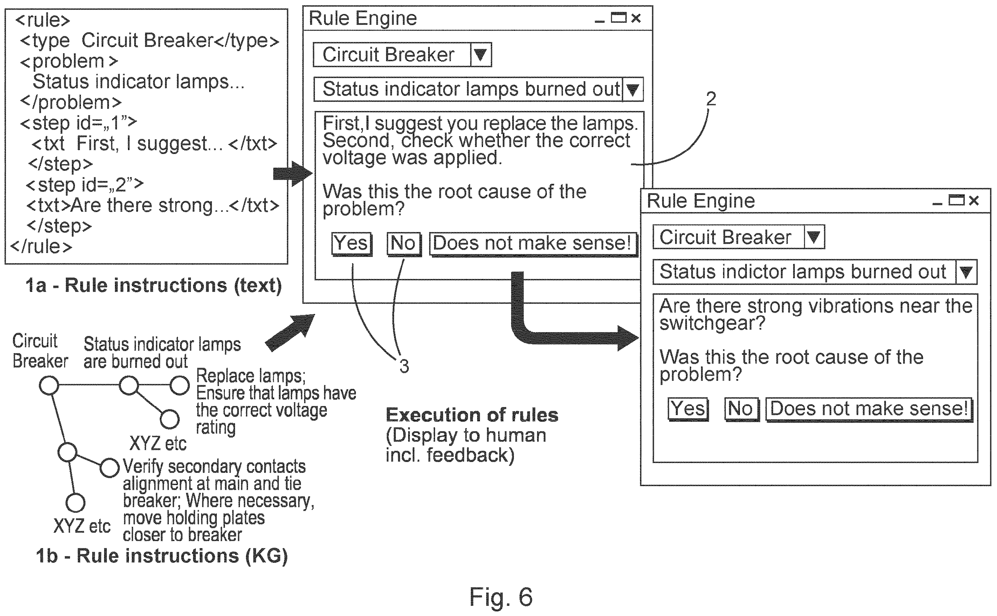

To help explain the complete new development, the embodiment of Fig. 6 is discussed. In Fig. 6 shows a representation of an exemplar maintenance and/or service system is shown, but in the system of figure 6 use is not made of a sensor system and/or a software system, whilst in the complete new development use is made of a sensor system and/or a software system-

Referring to Fig. 6 a rules engine executes a description of steps written in a custom textual description language, shown at 1a in Fig. 6, or executes a description of steps represented as a knowledge graph, shown at 1b in Fig. 6, depending on the design. As a result, at each step, specified instructions are shown as text to a service technician, shown at 2 in Fig. 6. After reading the instruction text for the step and trying it out in real life, the technician can press buttons, shown at 3 in Fig. 6, to move on. (More complex flows are possible, where this is a very simple example of a list of suggested solutions close. However, in the execution of the rules, sometimes an action is presented to the service technician, that requires the service technician to call up software service, call up an information system, or call up a sensor to take sensor data for example. The steps need to be performed by the technician manually.

The inventors realized that such a process could be improved, by augmenting the rules with executable elements.

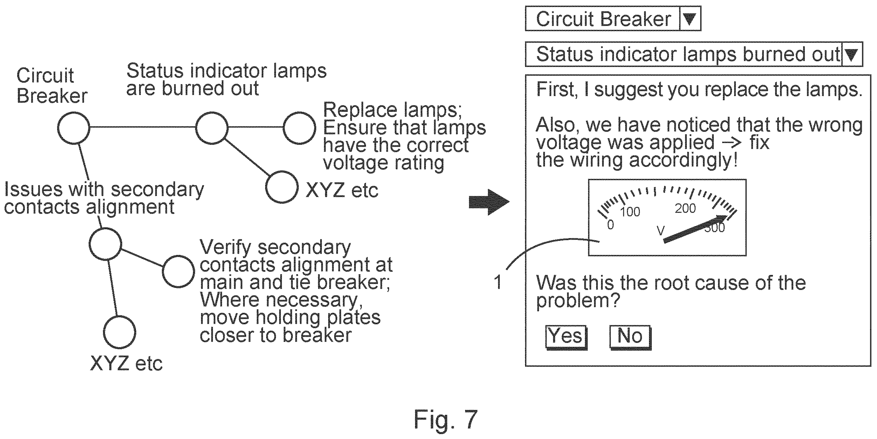

Thus, preferring to Fig. 7, rather than simply the presentation of text to the service technician shown at 2 in Fig. 6, but required the service technician to manually carry out an action, in the new development as shown in Fig. 7, taking the example of previously text been presented to the service technician to check the voltage, has been replaced by an automated call to a software interface to a voltage sensor, shown at 1 in Fig. 7, where the service technician is now presented with sensor data associated with a voltage sensor having taken the appropriate voltage measurement automatically. Thus, the question about the correct voltage can be answered directly, without the service technician having to manually go through the process of acquiring the voltage sensor data, reducing the level of human work and improving efficiency.

It is to be noted that in the new development, the system can automatically make a call for the acquisition of sensor data, of an assessment to be made, for example where a call can be made to condition monitoring software, or statistical models that help assess the problems that the switchgear and maintenance has, and calls can be made to acquire information from databases, interact with reliability calculation tools, or provide software interface to a service.

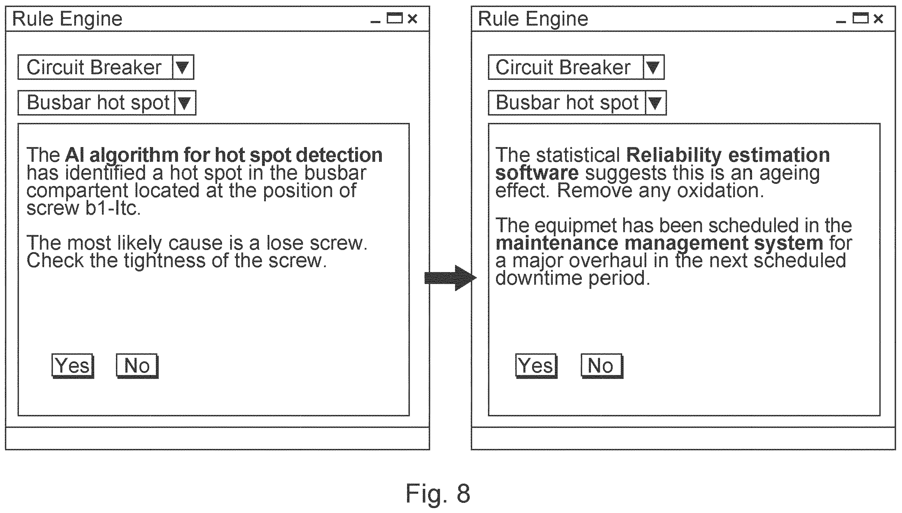

Fig. 8 shows example of such functionality.

In another exemplary embodiment, a computer program or computer program element is provided that is characterized by being configured to execute the method steps of the method according to one of the preceding embodiments, on an appropriate processor or system.

The computer program element might therefore be stored on a computer unit, which might also be part of an embodiment. This computing unit may be configured to perform or induce performing of the steps of the method described above. Moreover, it may be configured to operate the components of the above described system. The computing unit can be configured to operate automatically and/or to execute the orders of a user. A computer program may be loaded into a working memory of a data processor. The data processor may thus be equipped to carry out the method according to one of the preceding embodiments.

This exemplary embodiment of the invention covers both, a computer program that right from the beginning uses the invention and computer program that by means of an update turns an existing program into a program that uses the invention.

Further on, the computer program element might be able to provide all necessary steps to fulfill the procedure of an exemplary embodiment of the method as described above.

According to a further exemplary embodiment of the present invention, a computer readable medium, such as a CD-ROM, USB stick or the like, is presented wherein the computer readable medium has a computer program element stored on it which computer program element is described by the preceding section.

A computer program may be stored and/or distributed on a suitable medium, such as an optical storage medium or a solid state medium supplied together with or as part of other hardware, but may also be distributed in other forms, such as via the internet or other wired or wireless telecommunication systems.

However, the computer program may also be presented over a network like the World Wide Web and can be downloaded into the working memory of a data processor from such a network. According to a further exemplary embodiment of the present invention, a medium for making a computer program element available for downloading is provided, which computer program element is arranged to perform a method according to one of the previously described embodiments of the invention.

### Reference Numerals

- 10: Deterministic Rule Engine
- 20: Input Unit
- 30: Output Unit
- 40: Sensor System
- 50: Software System
- 100: Rule Utilization System
- 200: Maintenance and/or Service System

## Claims

1. A rule utilization system (100) for a low, medium or high voltage switchgear, comprising:
- a deterministic rule engine (10);
- an input unit (20); and
- an output unit (30);
wherein the input unit is configured to receive a request based on input from an operator relating to an operation to be performed on a switchgear;
wherein the deterministic rule engine is configured to execute a plurality of rules relating to the operation to be performed on the switchgear, wherein the plurality of rules relating to the operation to be performed on the switchgear were obtained based on the request, wherein the execution comprises utilization of the output unit to call a sensor system (40) to carry out a measurement of a part of the switchgear and utilization of the input unit to receive a result of the measurement of the part of the switchgear and/or utilization of the output unit to call a software system (50) to carry out an assessment of a part of the switchgear and utilization of the input unit to receive a result of the assessment of the part of the switchgear;
wherein the deterministic rule engine is configured to generate at least one action for the operator to perform relating to the switchgear, and wherein the generation of the at least one action for the operator comprises utilization of the result of the measurement of the part of the switchgear and/or the result of the assessment of the part of the switchgear; and
wherein the output unit is configured to output the at least one action for the operator.

2. System according to claim 1, wherein the generation of the at least one action for the operator comprises utilization of the plurality of rules relating to the operation to be performed on the switchgear.

3. System according to any of claims 1-2, wherein the plurality of rules relating to the operation to be performed on the switchgear comprises computational code; and/or wherein the plurality of rules relating to the operation to be performed on the switchgear comprises natural language.

4. System according to any of claims 1-3, wherein the software system comprises one or more of: condition monitoring software, statistical model software.

5. System according to any of claims 1-4, wherein the sensor system comprises one or more of: a hot spot detection system, a current monitor system, a voltage monitor system, a resistance monitor system.

6. System according to any of claims 1-5, wherein the request comprises natural language text based instructions; and/or wherein the request comprises graph based instructions.

7. A maintenance and/or service system (200) for a low, medium or high voltage switchgear, comprising:
- a deterministic rule engine (10);
- an input unit (20);
- an output unit (30);
- a sensor system (40) and/or a software system (50);
wherein the input unit is configured to receive a request based on input from an operator relating to an operation to be performed on a switchgear;
wherein the deterministic rule engine is configured to execute a plurality of rules relating to the operation to be performed on the switchgear, wherein the plurality of rules relating to the operation to be performed on the switchgear were obtained based on the request, wherein the execution comprises utilization of the sensor system (40) to carry out a measurement of a part of the switchgear to generate a result of the measurement of the part of the switchgear and/or utilization of the software system (50) to carry out an assessment of a part of the switchgear to generate a result of the assessment of the part of the switchgear;
wherein the deterministic rule engine is configured to generate at least one action for the operator to perform relating to the switchgear, and wherein the generation of the at least one action for the operator comprises utilization of the result of the measurement of the part of the switchgear and/or the result of the assessment of the part of the switchgear; and
wherein the output unit is configured to output the at least one action for the operator.

8. A rule utilization method for a low, medium or high voltage switchgear, comprising:
receiving, by an input unit, a request based on input from an operator relating to an operation to be performed on a switchgear;
executing, by a deterministic rule engine, a plurality of rules relating to the operation to be performed on the switchgear, wherein the plurality of rules relating to the operation to be performed on the switchgear were obtained based on the request, wherein the executing comprises utilizing an output unit to call a sensor system to carry out a measurement of a part of the switchgear and utilizing the input unit to receive a result of the measurement of the part of the switchgear and/or utilizing the output unit to call a software system to carry out an assessment of a part of the switchgear and utilizing the input unit to receive a result of the assessment of the part of the switchgear;
generating, by the deterministic rule engine, at least one action for the operator to perform relating to the switchgear, and wherein the generating the at least one action for the operator comprises utilizing the result of the measurement of the part of the switchgear and/or the result of the assessment of the part of the switchgear; and
outputting, by the output unit, the at least one action for the operator.

9. A maintenance and/or service method for a low, medium or high voltage switchgear, comprising:
receiving, by an input unit, a request based on input from an operator relating to an operation to be performed on a switchgear;
executing, by a deterministic rule engine, a plurality of rules relating to the operation to be performed on the switchgear, wherein the plurality of rules relating to the operation to be performed on the switchgear were obtained based on the request, wherein the executing comprises utilizing a sensor system to carry out a measurement of a part of the switchgear to generate a result of the measurement of the part of the switchgear and/or utilizing the software system to carry out an assessment of a part of the switchgear to generate a result of the assessment of the part of the switchgear;
generating, by the deterministic rule engine, at least one action for the operator to perform relating to the switchgear, and wherein the generating the at least one action for the operator comprises utilizing the result of the measurement of the part of the switchgear and/or the result of the assessment of the part of the switchgear; and
outputting, by an output unit, the at least one action for the operator.

10. A computer program element for controlling a processor to carry out the method of any of claims 8-9.
